# EUROPEAN PATENT APPLICATION

(11) **EP 1 903 824 A2**
(43) Date of publication of application: **26.03.2008**
(21) Application number: 07018641.6
(22) Date of filing: 21.09.2007
(51) Int. Cl.: H04Q 7/38

(54) **Method for detecting radio link failure in wireless communications system and related apparatus**

(30) Priority: 21.09.2006 US 846102 P
(71) Applicant: Innovative Sonic Limited, Tortola (VG)
(72) Inventor: Jen, Yu-Chih, Peitou, Taipei City (TW)
(74) Representative: Schaeberle, Steffen

(57) **Abstract**

To provide services having different QoS requirements with different timers or parameters for detecting radio link failure in a wireless communications system, detecting the radio link failure includes utilizing at least one timer of a packet switching domain of a communications device to detect the radio link failure, and utilizing at least one parameter of the packet switching domain of the communications device to detect the radio link failure (302, 402).

## Description

This application claims the benefit of the filing date of U.S. Provisional Patent Application No. 60/846,102, filed on September 21, 2006, the contents of which are hereby incorporated by reference.

The present invention relates to a method of detecting radio link failure in a wireless communications system and related device according to the pre-characterizing clauses of claims 1, 14, 15, and 22.

In a wireless communications system, radio link failure (RLF) between user equipment (UE) and UTRAN can occur due to all kinds of impairments in a wireless environment, unfavorable signal propagation conditions, or even system malfunctions. For some applications, upon RLF, a user may notice immediately if there is unexpected delay or discontinuity in the radio bearer over which the service is provided. Mechanisms, including a cell update procedure, used to detect and/or handle the failures require parameters and timers to trigger each step of a normal procedure, or to make decisions for linking to other procedures. With the mechanism, re-establishments of lost radio connections will be managed, so that the incident is likely to be unnoticed by the user, or at least can be recovered from as soon as possible.

In 3GPP TS 25.331 V6.10,"Radio Resource Control (RRC); Protocol specification", the timers and parameters in the UE, e.g. T313, T314/T315, N302, N315, N313, T302, or T307, are obtained from a system information block, and some are used with counters, e.g. V302, for handling related circumstances, respectively. For example, T314, and T315, acting as re-establishment timers when re-establishments of lost connections are still allowed, are simply used to determine when to go to IDLE mode after reconnection attempts from the decisions of cell update and reselection, where T314 and T315 are typically used in circuit switching and packet switching domain, respectively. T314 and T315 values used in NBs are configured by RNC and are usually larger than those used in UEs. In contrast, in the case of 3GPP LTE, it is assumed that only the packet switching domain will be utilized, and it is expected that there will be more applications for mobile devices. The provision of similar mechanisms for RLF in LTE remains to be well defined.

Forward handover is used in UMTS to recover the loss of a radio link, or a failed reconfiguration procedure. A UE can initiate a cell update procedure with the target Node B when a regular handover fails and when the UE is not able to go back to the source Node B. In LTE, efficient performance of forward handover is expected and a related forwarding feature can be further exploited to enhance the radio link connection and service continuity.

In UMTS, there are two timers used to decide when to enter the IDLE mode upon the detection of RLF. Based on the assumption that an RLF in LTE_ACTIVE (RRC_CONNECTED) state is most comparable with an RLF in CELL_DCH in UMTS, it is suggested that only one timer (T315 for PS domain) will be needed to decide when to enter LTE₋IDLE (RRC_IDLE), since there will be only one domain in LTE.

In the prior art, it remains unclear how many timers are used to determine when to go to IDLE and how each timer value is configured in LTE. It is understood that there will be only one domain (PS) in LTE. However, one domain does not mean that just one timer is needed. For, when two timers, working independently, were introduced in UMTS for two domains, the characteristics of provided application services, e.g. real time or non-real time, were also considered to set the configuration values. In LTE, employed services and new applications will have various QoS requirements and different sensitivities to the endurable duration of radio link failure, e.g. out of synchronization.

In addition, based on the consideration of potential UE capability, e.g. dual receiver or multiple receiver, it is possible that the UE will maintain more than one radio link in different frequency layers or monitor different frequency bands, where different services and applications may applied. Therefore, it is possible that radio link failure will happen in one frequency layer, and the other frequency layer (or other frequency layers in case of multiple receiver) will maintain good radio link condition. Similarly, it is also possible that one service-providing entity will encounter a malfunction, but the other will provide stable services. Even with one receiver, different services may require different timers. Therefore, there is no reason to maintain only one timer that may limit the efficiency of UE capability and be unfair to different service requirements. The number of timers and configuration value of those times can depend on services, QoS, number of receivers/frequency layer, and even service providing entities/area.

On the other hand, the values of timers are configured in the RNC in UMTS. However, LTE removes the RNC, so that it is unclear which entity should decide the configuration values of the timers. It is known that characteristics of SAE bearer services will be decided at the gateway level (aGW). In addition, a functional entity at the gateway level also knows .about network configuration and signaling and user plan load. Yet, the functional entity at the NodeB level (eNB) might respond and reflect the transmission status more quickly.

Further, in UMTS, T313 (based on N31 3) and N313 (maximum number of successive out of sync indications received from L1) are used to detect the radio link failure. In addition, T302, N302 and V302 are used for a cell update/URA update procedure, where V302 is a counter/variable instead of a timer/parameter. It is set by UE instead of being received from SIB.

Similar to the problem of the prior art mentioned above, it remains unclear how many timers and parameters are used to detect or handle the radio link failure, and how those values are configured in LTE. In addition, there might be several mobility and QoS levels for one single application. For example, from the same gaming/MBMS service provider (server), a provided gaming application running on a UE could be real time or non-real time with mobility levels of none, low, medium or high. Consequently, an application might require a cell update procedure (or a random access procedure in LTE performs the similar functions) more frequent sometimes, but not require the cell update procedure (or same-functional procedure) as frequently at other times. On the other hand, for some applications, the time of detection of radio link failure might be more critical than others. In LTE, a random access procedure is used to handle RLF, having similar function but employing different techniques and steps. Mobility level depends on speed/behavior of UE motion and coverage of area (e.g. a home base station/cell deployment normally has less coverage than the coverage of a macro-layer base station/cell deployment).

Thus, it seems desirable that the timers and parameters in UE and eNB in LTE be updateable or reconfigurable, without the need for bearer re-establishment. This is based on the assumption that values of timer(s) and parameter(s) for RLF recovery by initiating the cell update procedure or same-functional procedure (e.g. random access procedure) are received during SAE bearer establishment.

For all of the above discussion, mapping from LTE_IDLE to RRC_IDLE and from LTE_ACTIVE to RRC_CONNECTED are assumed.

This in mind, the present invention aims at providing a method and apparatus for detecting radio link failure in a wireless communications system, so as to use at least one timer for detecting radio link failures in a wireless communications system.

This is achieved by a method and apparatus for detecting radio link failure in a wireless communications system according to the pre-characterizing clauses of claims 1, 14, 15, and 22. The dependent claims pertain to corresponding further developments and improvements.

As will be seen more clearly from the detailed description following below, a method of detecting radio link failure in a communications device of a wireless communications system comprises utilizing at least one timer or parameter of a packet switching domain of the communications device to detect the radio link failure.

In the following, the invention is further illustrated by way of example, taking reference to the accompanying drawings. Thereof
Fig. 1 is a functional block diagram of a communications device.
Fig. 2 is a diagram of the program code shown in Fig. 1.
Fig. 3 is a flowchart of detecting radio link failure according to a preferred embodiment of the present invention.
Fig. 4 is a flowchart of detecting radio link failure according to a second embodiment of the present invention.

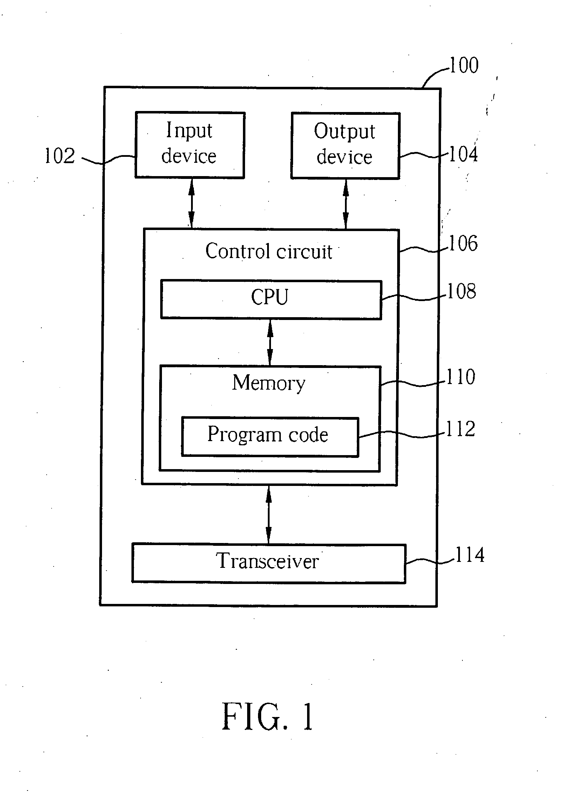

Please refer to Fig. 1, which is a functional block diagram of a communications device 100. For the sake of brevity, Fig. 1 only shows an input device 102, an output device 104, a control circuit 106, a central processing unit (CPU) 108, a memory 110, a program code 112, and a transceiver 114 of the communications device 100.

In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3. Preferably, the communications device 100 is utilized in an LTE/SAE mobile communications system.

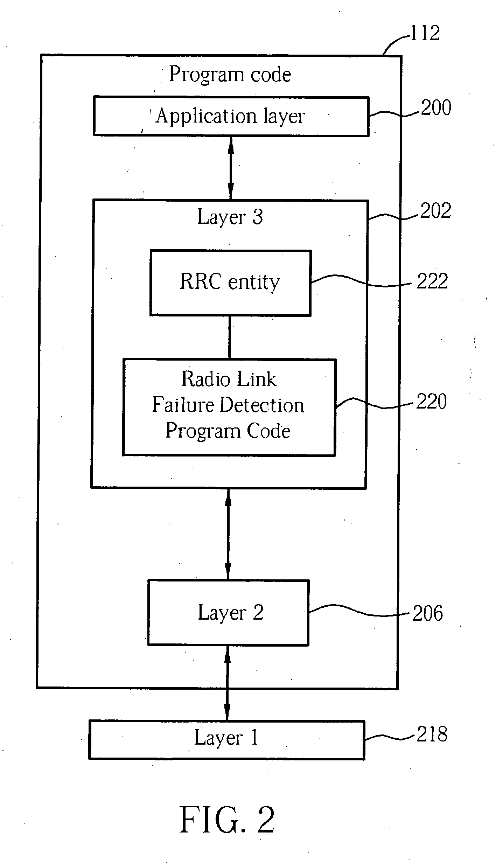

Please continue to refer to Fig. 2. Fig. 2 is a diagram of the program code 112 shown in Fig. 1. The program code 112 includes an application layer 200, a Layer 3 202, and a Layer 2 206, and is coupled to a Layer 1 218. The Layer 3 202 includes a radio resource control (RRC) entity 222, which is used for controlling the Layer 1 218 and the Layer 2 206 and performing peer-to-peer RRC communication with other communications devices, such as a base station or a Node-B-like entity. In addition, the RRC entity 222 can change an RRC state of the communications device 100, switching between an idle mode, a detached state, and an active state. The program code 112 further comprises a radio link failure detection program code 220, which is used for detecting radio link failure.

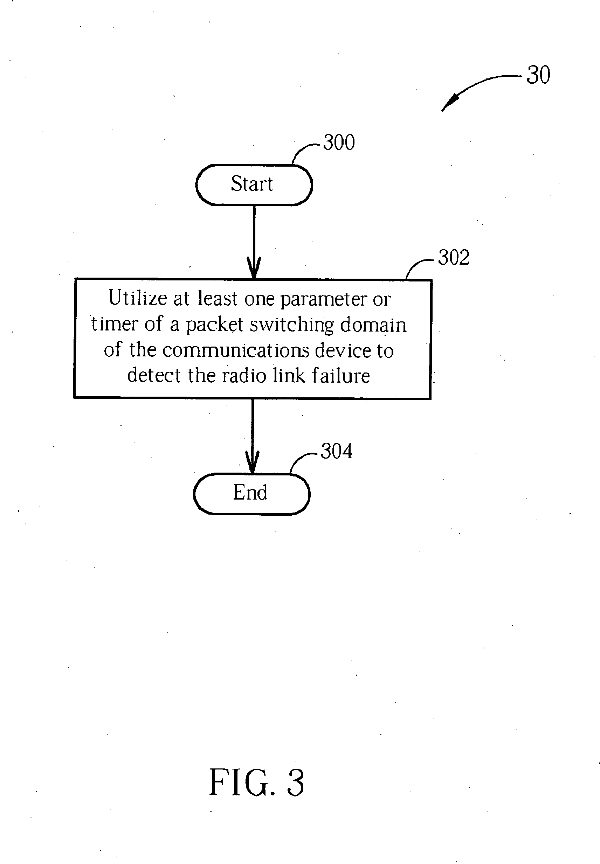

Please refer to Fig. 3, which is a flowchart of a process 30 for detecting radio link failure according to a preferred embodiment of the present invention. The process 30 is used to detect radio link failure in a communications device, such as the radio link failure detection program code 220 in the communications device 100 described above, in a wireless communications system, such as an LTE/SAE wireless communications system, and comprises the following steps:
Step 300: Start.
Step 302: Utilize at least one parameter or timer of a packet switching domain of the communications device to detect the radio link failure.
Step 304: End.

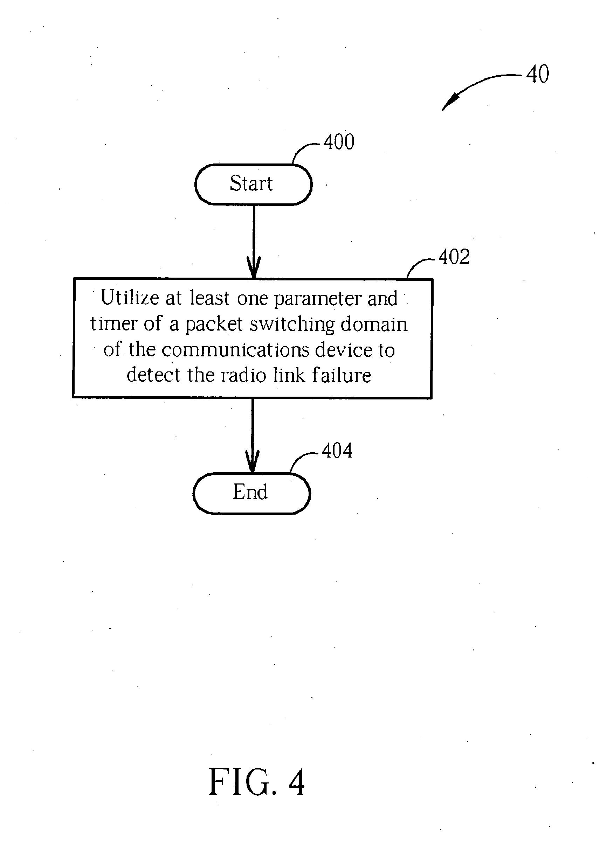

Please further refer to Fig. 4, which is a flowchart of a process 40 for detecting radio link failure according to a second embodiment of the present invention. The process 40 is used to detect radio link failure in a communications device, such as the radio link failure detection program code 220 in the communications device 100 described above, in a wireless communications system, such as an LTE/SAE wireless communications system, and comprises the following steps:
Step 400: Start.
Step 402: Utilize at least one parameter and timer of a packet switching domain of the communications device to detect the radio link failure.
Step 404: End.

The at least one timer (or at least two timers throughout) and the at least one parameter (or at least two parameters throughout) can be configured by a functional entity, or by a decision from a set of functional entities. The combination of the at least one timer and the at least one parameter can form so called a set or a pair. The at least one set of parameters comprises at least a first parameter for indicating a number of connection discontinuity, and a second parameter for indicating a number of connection continuity. The values of the at least one timer and the at least one parameter are obtained in system information blocks sent from an evolved NodeB (eNB) or in control information from a higher layer (e.g. NAS) of the user equipment, or suggested by a functional entity in the user equipment or a network service provider. The at least one timer and the at least one parameter are not restricted to a class of services if not configured. The radio link failure is indicated when the at least one timer expires, when the number of out of service confirmations is equal to the configured value of the parameter, or when the configured value of the parameter is equal to a number of out of sync confirmations. The values of the at least one timer and the at least one parameter can also be determined according to Layer 1 characteristics or network statistics. The at least one timer and the at least one parameter can be used for RLF detection by a class of services sharing a physical channel or using a proper number of physical channels on demand. If more than one timer is used for RLF detection, the timer providing earliest determination can dominate the detection result, the timer providing least delay time can dominate the detection result, or the timer spending a period of time closest to a predetermined detection delay can dominate the detection result. If more than one parameter is used for RLF detection, the parameter providing least delay time can dominate the detection result, the parameter providing earliest determination can dominate the detection result, or the parameter spending a period of time closest to a predetermined detection delay can dominate the detection result. The parameter is set by the UE based on the configuration information from eNB, higher layer of the UE, or network. The UE will increment the number of out of sync indications received from L1 until the number of out of sync indications reaches the configured value of the parameter.

The values of the at least one timer and the at least one parameter are predetermined and stored in the functional entity, which could be a mobility management entity in an access gateway (aGW), a scheduler in an evolved NodeB (eNB), a radio bearer control entity in the eNB, or a mobility management entity in the eNB. The set of functional entities is included in a non-access stratum (NAS) of an access gateway (aGW), or in a control plane of the eNB. The configured values of the at least one timer and the at least one parameter are based on statistics, status of radio link or transmission, service configuration, network configuration, system load, or Layer 1 characteristics.

The reconfiguration procedure comprises a normal re-establishment, reconfiguration, or bearer setup procedure, and can be triggered by the received suggestion message. The system information blocks are dedicated to a UE or a group of UEs. If the service is a UE-initiated QoS service, the suggestion originates from the UE, whereas if the service is a Network-initiated QoS service, the suggestion originates from the network service provider.

Each timer of the at least one timer can be applied to a same class of services, or applied to different classes of services. If a failure detection criterion is fulfilled, the UE considers radio link failure happens, whereas if the failure detection criterion is not fulfilled, the UE shall consider the radio link to be ongoing. The values are set to ensure that the probability of radio link failure detection is high.

The at least one timer and the at least one parameter can dominate the detection result for a physical channel using the at least one timer and the at least one parameter for RLF detection shared by the class of service or classes of services. Or, the at least one timer and the at least one parameter can be referred to for the physical channel using the at least one timer and the at least one parameter for RLF detection shared by the class of service or the classes of services. For a physical channel using the at least one timer and the at least one parameter for RLF detection shared by the class of service or the classes of services, the at least one timer and the at least one parameter providing earlier or earliest determination of the failed or ongoing radio link dominate the detection result or are only referred to, the at least one timer and the at least one parameter imposing less or least delay time can dominate the detection result or are only referred to, or the at least one timer and the at least one parameter spending a period of time which is closer or closest to a reference detection delay can dominate the detection result or are only referred to.

Please note that the above-mentioned configured number(s), value(s) of timer(s), parameter(s), and counter(s)/variable(s) can be reconfigured to new number(s) or value(s), or a new range of number(s) or value(s) if information for change can be acquired, or if functional entity (entities) in UE or the radio access network support reconfiguration.

Please also note that mention is given of the same class of services or different classes of services. Such classes can be unicast or multicast, real time or non real time, or other possible categories. However, p-t-m MBMS services are excluded. Radio link failure and recovery procedures are not applicable to the p-t-m MBMS services. The UE can receive p-t-m MBMS services in any state (including idle mode, where the UE does not need to enter the connected mode to receive the p-t-m MBMS services). Thus, the UE does not need to release all RBs and enter idle mode when timers for this type of service expire.

Compared to the prior art, the present invention allows different timers and parameters to be used for detecting radio link failure, so that services with different QoS requirements can use the different timers and parameters to detect the radio link failure according to their respective QoS requirements.

## Claims

1. A method of detecting radio link failure in a communications device of a wireless communications system, the method comprising:
utilizing at least one parameter or at least one timer of a packet switching domain of the communications device to detect the radio link failure (302).

2. The method of claim 1, wherein the at least one parameter or timer is configured by a functional entity or a decision from a set of functional entities.

3. The method of claim 1, wherein the parameters comprises at least a first parameter for indicating a number of connection discontinuity, and a second parameter for indicating a number of connection continuity.

4. The method of claim 1, wherein values of the at least one parameter or timer are obtained in system information blocks sent from an evolved NodeB or in control information from a higher layer of a user equipment.

5. The method of claim 1, wherein values of the at least one parameter or timer are suggested by a functional entity in a user equipment or a network service provider.

6. The method of claim 1, wherein values of the at least one parameter or timer are determined according to Layer 1 characteristics or network statistics.

7. The method of claim 1, wherein the at least one parameter or timer are used for radio link failure detection by a class of services sharing a physical channel or using a proper number of physical channels on demand.

8. The method of claim 1, wherein at least one timer is used for radio link failure detection, the timer providing earliest determination dominates the detection result, least delay time dominates the detection result.

9. The method of claim 1, wherein if at least one timer is used for radio link failure detection, the timer spending a period of time closest to a predetermined detection delay dominates the detection result.

10. The method of claim 2, wherein the functional entity is a mobility management entity in an access gateway.

11. The method of claim 2, wherein the functional entity is a scheduler in an evolved NodeB, a radio bearer control entity in an evolved NodeB or a mobility management entity in an evolved NodeB.

12. The method of claim 2, wherein the configured values of the at least one timer and the at least one parameter are based on service configuration, network configuration, system load or Layer 1 characteristics.

13. The method of claim 2, wherein the reconfiguration procedure comprises a normal re-establishment, reconfiguration, or bearer setup procedure.

14. A communications device (100) capable of detecting radio link failure for use in a wireless communications system, the communications device (100) comprising:
a control (106) circuit for realizing functions of the communications device (100);
a processor (108) installed in the control circuit (106), for executing a program code (112) to operate the control circuit (106); and
a memory (110) coupled to the processor (108) for storing the program code (112), the program code (112) comprising:
code for utilizing at least one parameter or timer of a packet switching domain of the communications device to detect the radio link failure (302).

15. A method of detecting radio link failure in a communications device of a wireless communications system, the method comprising:
utilizing at least one parameter and timer of a packet switching domain of the communications device to detect the radio link failure (402).

16. The method of claim 15, wherein the at least one parameter and timer is configured by a functional entity or a decision from a set of functional entities.

17. The method of claim 15, wherein the parameters comprises at least a first parameter for indicating a number of connection discontinuity, and a second parameter for indicating a number of connection continuity.

18. The method of claim 15, wherein values of the at least one parameter and timer are obtained in system information blocks sent from an evolved NodeB or in control information from a higher layer of a user equipment.

19. The method of claim 15, wherein values of the at least one parameter and timer are suggested by a functional entity in a user equipment or a network service provider.

20. The method of claim 15, wherein values of the at least one parameter and timer are determined according to Layer 1 characteristics or network statistics.

21. The method of claim 15, wherein the at least one parameter and timer are used for radio link failure detection by a class of services sharing a physical channel or using a proper number of physical channels on demand.

22. A communications device (100) capable of detecting radio link failure for use in a wireless communications system, the communications device (100) comprising:
a control (106) circuit for realizing functions of the communications device (100);
a processor (108) installed in the control circuit (106), for executing a program code (112) to operate the control circuit (106); and
a memory (110) coupled to the processor (108) for storing the program code (112), the program code (112) comprising:
code for utilizing at least one parameter and timer of a packet switching domain of the communications device to detect the radio link failure (402).
